# EUROPEAN PATENT SPECIFICATION

(11) **EP 2 048 074 B1**
(45) Date of publication and mention of the grant of the patent: **05.09.2018**
(21) Application number: 08017817.1
(22) Date of filing: 10.10.2008
(51) Int. Cl.: B62K 25/04, B62K 11/04, B62K 25/28

(54) **Suspension-adjuster for Motorcycle**
Dämpfereinstellung für Motorrad
Système de suspension réglable pour motocyclette

(30) Priority: 10.10.2007 JP 2007264952
(43) Date of publication of application: 15.04.2009
(73) Proprietor: Yamaha Hatsudoki Kabushiki Kaisha, Shizuoka-ken Shizuoka 438-8501 (JP)
(72) Inventor: Watanabe, Yuko, Iwata-shi Shizuoka-ken 438-8501 (JP); Kamioka, Takamasa, Iwata-shi Shizuoka-ken 438-8501 (JP)
(74) Representative: Grünecker Patent- und Rechtsanwälte PartG mbB

(56) References cited:
- EP-A2- 0 972 703
- US-A- 3 948 543
- US-A- 5 348 112
- US-A- 6 044 940
- US-B1- 7 159 699

## Description

The present invention relates to a straddle-type vehicle such as a motorcycle in which a rear suspension that buffers an external load that acts on a rear wheel is disposed between a rear arm and a vehicle body frame.

With motorcycles, it is common for a rear suspension that buffers external loads that act on the rear wheel to be installed between the rear arm and the vehicle body frame. There are some known examples of this type of rear suspension that are structured such that operating characteristics can be adjusted for situations in which only a driver rides on the vehicle and situations in which a rider on a rear seat also rides on the vehicle. Moreover, as disclosed in. WO2004-104441, adjustment of the operating characteristics of this type of rear suspension can be performed through remote operation. With this known device, an operation member for performing remote operation is positioned inside a vehicle body cover located under the rear seat.

However, with the above-mentioned conventional motorcycles, if the operation member that is positioned inside the vehicle body cover located under the rear seat is in a position that cannot be seen at all from the outside, this impedes operability. On the other hand, although operability is improved if the operation member is positioned in a location where it can be seen from the outside, depending on a placement position, the rear seat rider may mistake the operation member for the footrest and place their feet on top of it when they sits down on the rear seat, which may damage the operation member. The invention has been devised in light of the above-described conventional conditions.

The prior art documents US 7,159,699 B1 refers to an adjustable shock absorber provided with an absorber adjusting device directly attached to a shock absorber case. Said shock absorber unit is mounted on a lower part of a frame of a motorcycle in order to serve as a rear suspension means. The prior art document US 6,044,940 A discloses a remote control hydro-pneumatic shock absorber, wherein the respective adjuster is separated from the shock absorber. The adjustor and shock absorber are connected by means of a flexible tube. The further prior art document EP 0 972 703 A2 teaches an adjusting means for a suspension unit of a motorcycle, wherein the adjustor is movably mounted on a rail and arranged at an out part of a cover of the motorcycle. The prior art document US 5,348,112 refers to a motorcycle height adjustor with a height adjustment unit and a height control unit. Said units are connected with each other by means of a hydraulic line. The height adjustment unit is arranged on a lower part of the motorcycle, while the height control unit is arranged above the transmission means which is connected to the engine.

It is an objective of the present invention to provide a straddle-type vehicle in which, while operability is maintained, the rear seat rider will not mistakenly place their feet on an operating member.

According to the present invention said object is solved by a straddle-type vehicle having the features of independent claim 1. Preferred embodiments are laid down in the dependent claims.

Accordingly, it is provided a straddle-type vehicle comprising: a vehicle body frame, at least one footrest on which a rider sitting on a rear seat of the straddle-type vehicle can place his/her foot, and which is attached to the vehicle body frame, a rear arm swingably supported by the vehicle body frame and having a rear suspension, the rear suspension including at least one adjuster configured to remotely adjust at least one operation characteristic of the rear suspension, wherein the adjuster is at least partly disposed below the footrest when viewed from a rear of the straddle-type vehicle.

Accordingly, there is no danger of the rear seat rider placing their foot on the adjuster, so the adjuster can be positioned in a location that can be seen from the side of the vehicle, and this in itself improves operability.

Preferably, a vehicle body cover covers at least a side of a rear portion of the vehicle body frame, wherein, preferably, the footrest protrudes outwards from the vehicle body cover, and wherein, preferably, the adjuster is at least partly disposed in vehicle width direction on an inside of an outer end surface of the vehicle body cover when viewed from the rear of the straddle-type vehicle.

Accordingly, when the adjuster is viewed from the vehicle rear, it is positioned inside the vehicle body cover outside end surface in the vehicle width direction as well as below the footrest. Thus, the rear seat rider mistaking the adjuster for the footrest and placing their foot on it can be reliably inhibited.

Preferably, the adjuster comprises an adjusting knob which is disposed in vehicle width direction on the inside of the outer end surface of the vehicle body cover and/or below the footrest when viewed from the rear of the vehicle.

Further, preferably the footrest includes a footrest bracket attached to the vehicle body frame and a footrest main body attached to the footrest bracket, and, preferably, the adjuster, in particular the adjusting knob, is attached to the footrest bracket.

Still further, preferably the vehicle body frame includes a rear frame and a fuel tank disposed on an inside of the vehicle body frame, and, preferably, the footrest bracket is attached to a bottom part of the rear frame.

Yet further still, preferably the footrest bracket is attached by a bolt that is inserted from bottom to top in the bottom part of the rear frame.

According to a preferred embodiment, an exhaust system including a muffler is disposed so as to pass through at least one side of the straddle-type vehicle, and, preferably, the adjuster, in particular the adjusting knob, is located in a space surrounded by at least two of the vehicle body cover, the footrest and the muffler when viewed from the rear of the straddle-type vehicle.

According to another preferred embodiment, the vehicle body cover includes a mudguard that covers a rear wheel of the straddle-type vehicle from a top thereof and a fender main body that extends upward from a side edge portion of the mudguard in vehicle width direction, wherein, preferably, a disposition portion is formed in a boundary portion of the fender main body and the mudguard, and, preferably, the adjuster, in particular the adjusting knob, overlaps with the disposition portion and is positioned below the footrest when viewed from a side of the straddle-type vehicle.

Preferably, the adjuster includes a spring force adjuster configured to adjust a spring force of the rear suspension and/or at least one damping force adjuster configured to adjust a damping force of the rear suspension.

Further, preferably the damping force adjuster includes a pressure damping force adjuster and/or an extension damping force adjuster.

Still further, preferably an adjusting knob of the spring force adjuster is disposed above the rear arm and on one side in vehicle width direction, and, preferably, an adjusting knob of the damping force adjuster is disposed above the rear arm and on the other side in vehicle width direction.

Yet further still, preferably the damping force adjuster includes a sub-tank that is connected to the rear suspension by a hydraulic fluid path and stores hydraulic fluid, and, preferably, an adjusting knob that is provided on the sub-tank.

Preferably, the sub-tank and adjusting knob are disposed in vehicle width direction on an inside of an outer end surface of the vehicle body cover and below the footrest.

Further, preferably the spring force adjuster includes a cylinder mechanism connected to the rear suspension by a hydraulic pressure path, and, preferably, an adjusting knob that is attached to the cylinder mechanism.

Still further, preferably the cylinder mechanism and adjusting knob are disposed in vehicle width direction on an inside of an outer end surface of the vehicle body cover and below the footrest.

In the following, the present invention is explained in greater detail by means of embodiments thereof in conjunction with the accompanying drawings, wherein:
- FIG. 1: is a left side view of a motorcycle of one embodiment of the invention;
- FIG. 2: is a left side view of a portion of a rear suspension of the motorcycle;
- FIG. 3: is an oblique perspective view from the front diagonal left of the rear suspension;
- FIG. 4: is a plan view of the rear suspension;
- FIG. 5: is a back side view showing the disposition of a damping force adjuster and an initial adjuster of the motorcycle;
- FIG. 6: is a back side view showing the disposition of the pressure damping force adjuster;
- FIG. 7: is a side surface view of the initial adjuster;
- FIG. 8: is a bottom surface view of the initial adjuster;
- FIG. 9: is a side surface view of the pressure damping force adjuster; and
- FIG. 10: is a bottom surface view of the pressure damping force adjuster.

Among others, the following reference signs are used in the figures:
- 1: Motorcycle
- 2: Vehicle body frame
- 13: Exhaust system
- 13c: Muffler
- 17: Rear arm
- 19: Rear suspension
- 20: Fuel tank
- 24: Rear fender (Vehicle body cover)
- 24': Outer end surface of vehicle body cover
- 24a: Mudguard
- 24b: Fender main body
- 25: Adjuster
- 26: Rear frame
- 26m: Support boss portion (Bottom portion)
- 50: Footrest
- 51: Footrest bracket
- 52: Footrest main body
- 53a: Bolt
- 56: Pressure damping force adjuster
- 56a: Sub-tank
- 56b: Hydraulic fluid path
- 56e, 58e: Adjusting knob
- 58: Initial adjuster (Spring force adjuster)
- 58a: Cylinder mechanism
- 58b: Hydraulic pressure path
- a: One side of vehicle width direction
- b: The other side of vehicle width direction
- D, D': Disposition portion
- E, E': Surrounded area

Hereinafter, an embodiment will be described with reference to the appended drawings.

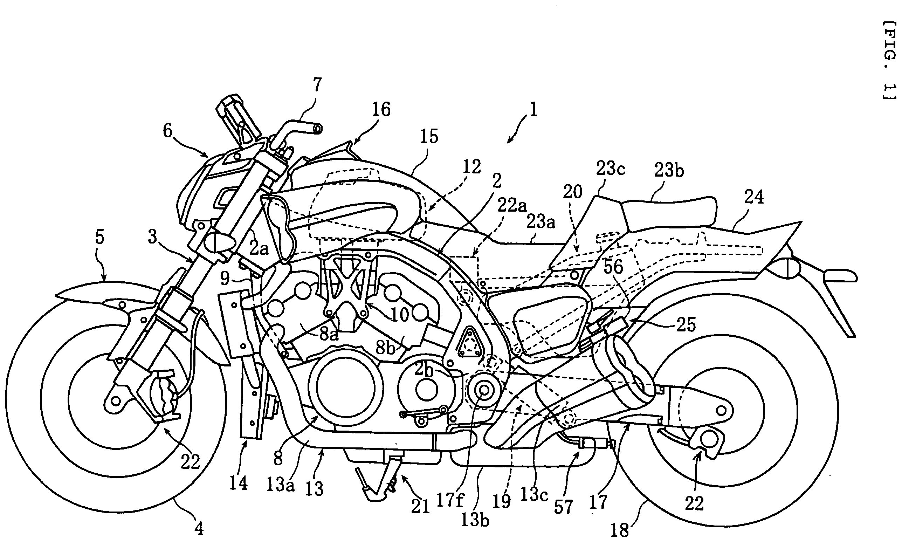

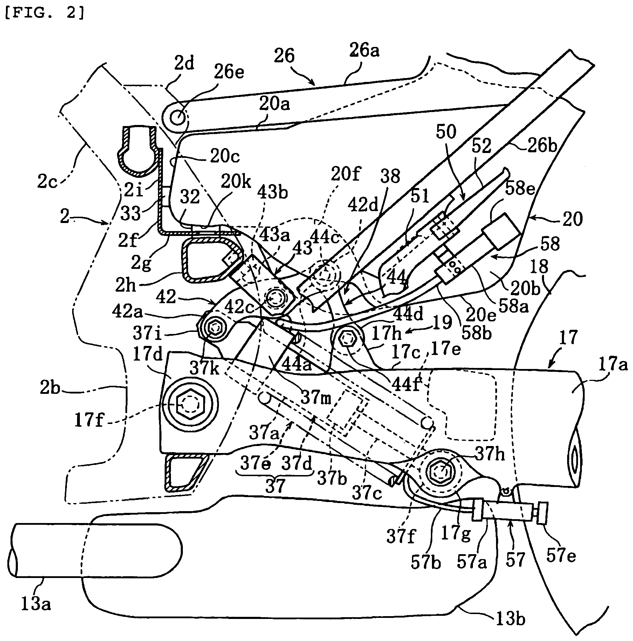

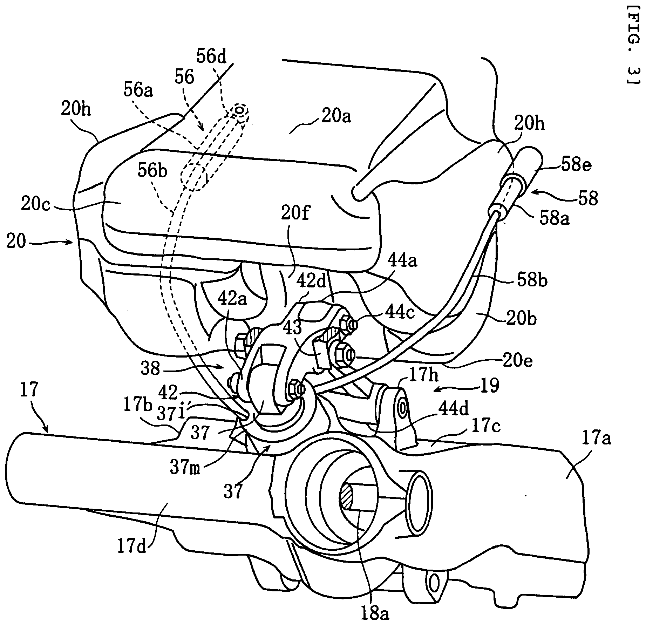

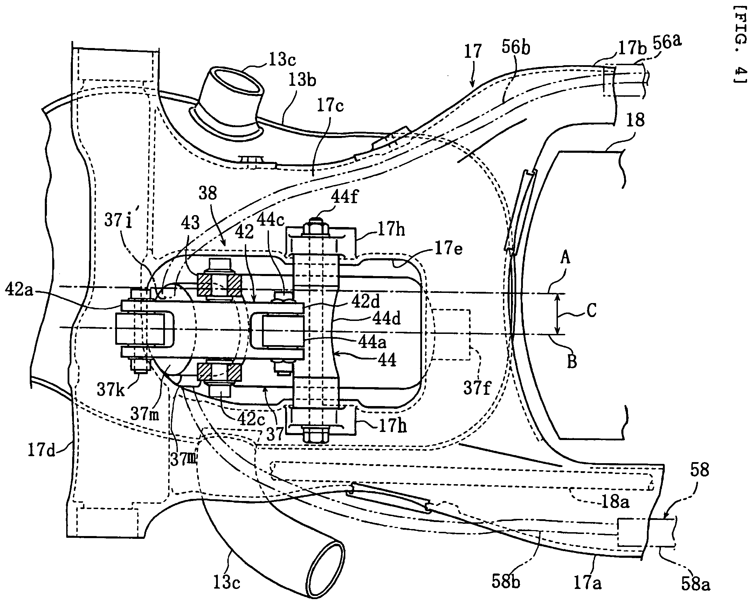

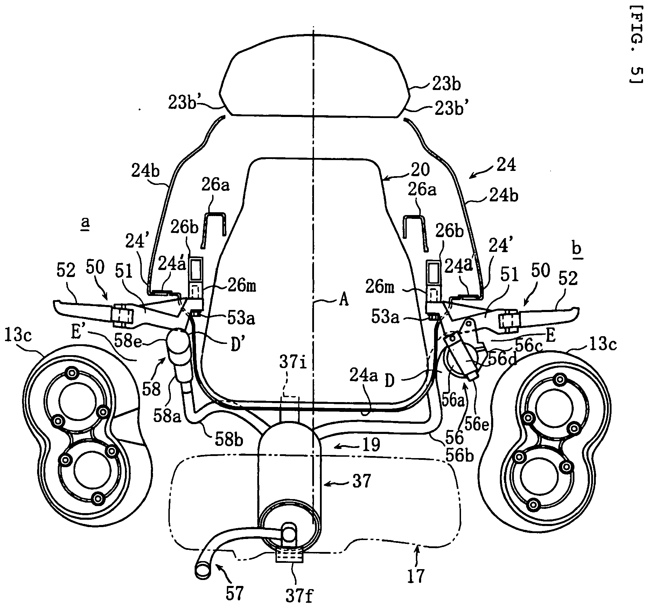

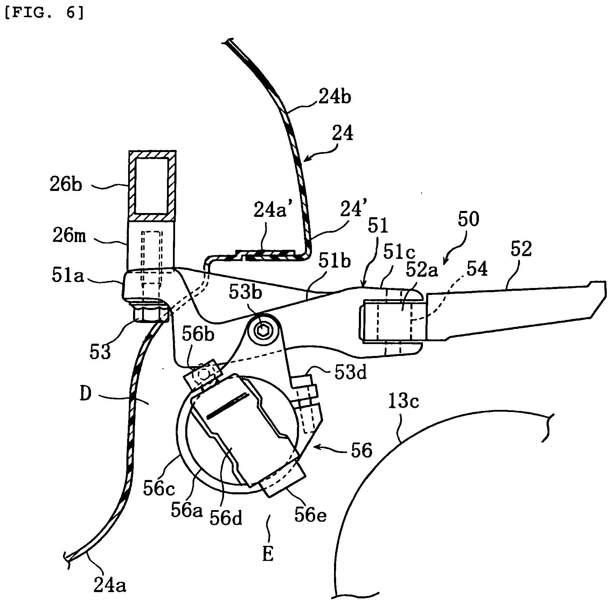

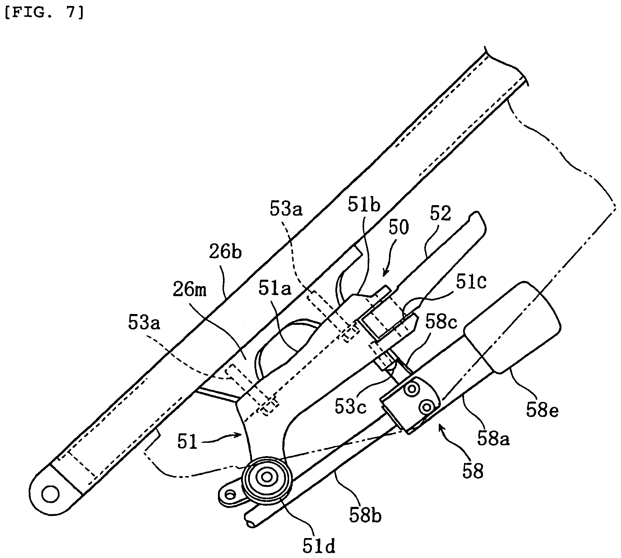

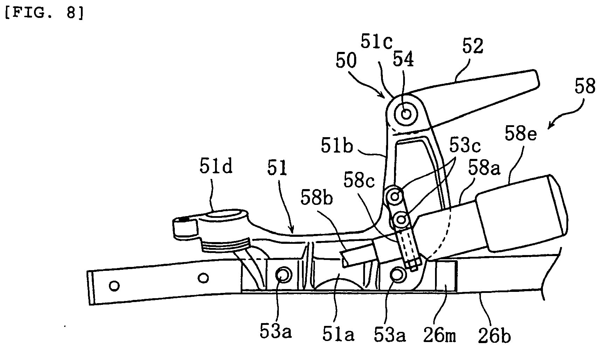

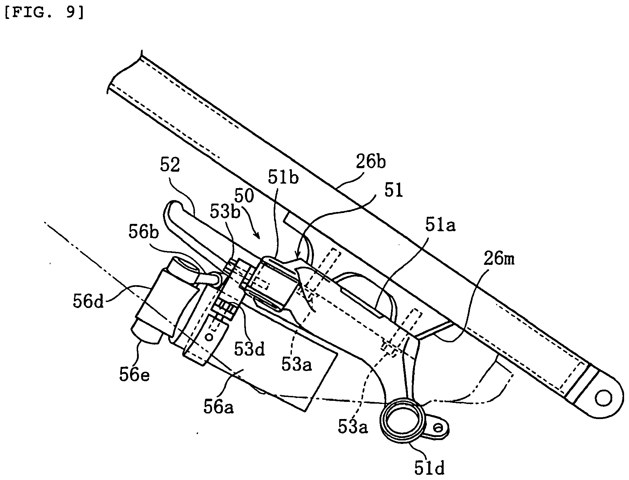

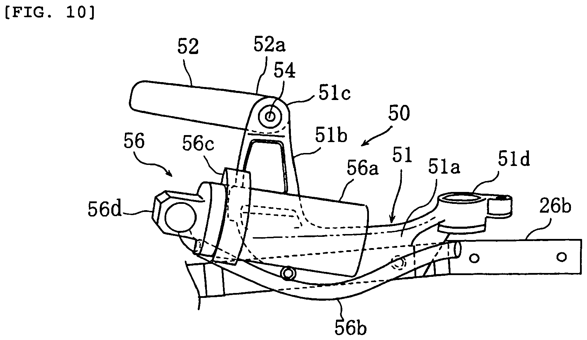

FIGs. 1 to 10 illustrate to explain a straddle-type vehicle, such as a motorcycle, of the embodiment. In general, a straddle-type vehicle has a body frame and a seat on which a rider can be seated straddling the body frame when being seated. Note that, the terms front, rear, left, and right as used in this embodiment indicate the front, rear, left, and right when viewed from a rider seated on a seat.

In the figures, the reference numeral 1 indicates a motorcycle which is generally structured as below. A head pipe 2a at the front end portion of a vehicle body frame 2 supports a front fork 3 in such a manner that the front fork 3 is steerable to the left and right. A front wheel 4 is pivotally supported at a lower end portion of the front fork 3 and the front wheel 4 is covered by a front fender 5 which is installed at the lower portion of the front fork 3. Moreover, the upper portion of the front fork 3 is provided with a headlight unit 6, and a steering handle 7 is fixed to the upper end portion of the front fork 3.

The vehicle body frame 2 has an engine unit 8 that is supported by being suspended by a front suspension bracket 9, a center suspension bracket 10, and a rear arm bracket portion 2b of the vehicle body frame 2. The engine unit 8 is connected to an intake system 12 and an exhaust system 13. Furthermore, a radiator unit 14 is provided at the front of the engine unit 8. The intake system 12 is covered, from the top thereof, by a frame cover 15 which is provided with an indicator 16 that indicates a vehicle condition.

Moreover, a lower portion of a left side wall of the engine unit 8 is provided with a side stand unit 21 that allows the motorcycle 1 to stand slightly tilted to the left.

In addition, a rear arm 17 is supported by the rear arm bracket portion 2b of the vehicle body frame 2 in such a manner that it can swing upward and downward. A rear wheel 18 is supported by a rear end portion of the rear arm 17. Hydraulic braking systems 22 and 22 are used to brake the rear wheel 18 and the front wheel 4.

A rear suspension 19 is disposed between the rear arm 17 and the rear arm bracket portion 2b. The rear suspension 19 is provided with a remote control-type operation characteristics adjuster 25.

A fuel tank 20 is disposed on top of the rear suspension 19. A hydraulic control unit 22a of the braking system 22 is disposed in front of and diagonally upward from the fuel tank 20. A front seat 23a is disposed such that it covers, from the top, the hydraulic control unit 22a and the fuel tank 20. A rear seat 23b is disposed at the rear of the front seat 23a. Note that a reference numeral 23c indicates a backrest for supporting a lower back of a rider. Furthermore, a rear fender 24 (vehicle body cover) which covers the rear wheel 18 from the top is disposed under the rear seat 23b.

The engine unit 8 is a water-cooled 4-stroke V-type 4-cylinder type engine that is structured such that the left and right front cylinders 8a and left and right rear cylinders 8b form a V-bank in a longitudinal direction.

The exhaust system 13 includes four exhaust pipes 13a that are connected with each of the cylinders of the engine unit 8 and extend to the rear. In addition, the exhaust system 13 has an exhaust chamber (capacity chamber) 13b that is shared by all cylinders and is connected with the respective exhaust pipes 13a, and left and right mufflers 13c that are connected with the left and right side walls of the exhaust chamber 13b and extend to the rear and diagonally upward on the left side and right side of the vehicle, respectively. The exhaust chamber 13b is disposed under the front portion of the rear arm 17 as well as in front of the rear wheel 18.

The rear arm 17 includes a left arm main body (a first arm main body) 17a located to the left side (one side) in a vehicle width direction, and a right arm main body (a second arm main body) 17b located to the right side (the other side). In addition, the rear arm 17 has a cross portion 17c for connecting the arm main bodies 17a and 17b with each other at the front portions thereof, and a pivot portion 17d formed at the front end portion of the cross portion 17c.

The left and right arm main bodies 17a and 17b each have cylindrical body structures and extend in the longitudinal direction of the vehicle. The left arm main body 17a is also used as a shaft case in which a rear wheel driving shaft 18a is inserted and housed. Thus, a diameter of the left arm main body 17a is larger than a diameter of the right arm main body 17b.

The cross portion 17c forms a flat box shape and is provided with a substantially rectangular opening 17e that passes vertically through the cross portion 17c. The opening 17e is formed in such manner as to be offset from a vehicle longitudinal centerline A towards one side (left side) of the vehicle width direction only by a dimension C. As will be described later, the opening 17e houses therein a cushion unit 37 of the rear suspension 19.

Furthermore, the pivot portion 17d has a pivot shaft 17f inserted and housed therein. The rear arm 17 is supported by the rear arm bracket portion 2b of the vehicle body frame 2 via the pivot shaft 17f such that it can swing upward and downward.

The fuel tank 20 is disposed in such a manner as to be housed in a rear frame 26 which constitutes a part of the vehicle body frame 2. The rear frame 26 has left and right seat rails 26a and 26a which extend substantially horizontally in a longitudinal direction, and has left and right back stays 26b and 26b which are fixedly connected to the rear portions of the left and right seat rails 26a and 26a and which extend to the front and diagonally downward from the rear portions. The rear frame 26 substantially forms a Y-shape in a vehicle side view. The seat rail 26a forms a U-shape, the opening of which is facing down, in a cross-sectional view. Moreover, the back stay 26b forms a rectangular shape in the cross-sectional view. Note that, while not shown in the diagrams, respective front end portions and respective rear end portions of the left and right seat rails 26a and 26a are connected by front and rear cross members which extend in the vehicle width direction. The rear frame 26 forms a substantially rectangular frame shape in a plane view.

The front end portion of each of the seat rails 26a of the rear frame 26 is detachably connected, by a bolt 26e, with a boss portion 2d formed at the middle portion of the left and right main frames 2c and 2c that extend to the rear and diagonally downward from the head pipe 2a. In addition, the front end portion of each of the back stays 26b is detachably connected to the rear arm bracket portion 2b.

Left and right footrests 50, 50 on which a rider sitting in a rear seat 23b places their feet are positioned on the lower part of the backrest 23c of the left and right back stays 26b. The footrest 50 includes a footrest bracket 51 fixed to a support boss portion (bottom part) 26m formed so that it protrudes under the bottom surface of the back stay 26b, and a footrest main body 52 that is supported by the footrest bracket 51 in such a manner that it rotates.

The footrest bracket 51 includes a base portion 51a that touches the seat surface of the support boss portion 26m from below, and the base portion 51a is tightened against the support boss portion 26m so that it is fixed by two bolts 53a, 53a that are inserted from below.

A support leg portion 51b at the rear end portion of the base portion 51a is formed in such a manner as to protrude substantially horizontally to the outside in the vehicle width direction. A base portion 52a of the footrest main body 52 is inserted and housed within a forked support portion 51c formed on the end of the support leg portion 51b.

Furthermore, the base portion 52a is supported by a support pin 54 inserted vertically so that it is able to turn between a retracted position in which it appears to be substantially adjacent to the rear fender 24 in a plane view and a use position in which it appears to protrude to the outside in the vehicle width direction.

Here, the rear fender 24 includes a mudguard 24a that covers the top of the rear wheel 18 and a fender main body 24b that covers the backrest 23c and left and right lower edge portions 23b' of the rear seat 23b from left and right outside edge portion 24a' of the mudguard 24a. Moreover, a disposition portion D is formed in a section of the rear fender 24 that matches the position of the footrest 50. This disposition portion D is formed with an adjacent part to the connecting portion of the mudguard 24a and fender main body 24b that is indented to the inside and up in the vehicle direction. The support leg portion 51b of the footrest bracket 51 passes through the wall surface from the boss portion 26m and extends to the outside in the vehicle width direction through the disposition portion D.

The fuel tank 20 is a sealed plastic container that is formed, for instance, by blow molding, and has a top wall 20a, left and right side walls 20b and 20b, a front wall 20c, a rear wall 20d, and a bottom wall 20e. A front portion of the bottom wall 20e is provided with a recessed portion 20f to avoid interference with a link mechanism 38 to be described later.

The fuel tank 20 is disposed between the left and right seat rails 26a and 26a, and the left and right back stays 26b and 26b. Also, an overhanging portion 20k that extends forward from the recessed portion 20f of the fuel tank 20 is disposed in a horizontal side portion 2g of a support plate 2f that has an L-shaped cross section via a flat damper 32 formed from an elastic member such as rubber. Moreover, the front wall 20c touches a vertical side portion 2i of the support plate 2f via a plate damper 33 formed from an elastic member such as rubber.

The rear suspension 19 includes the cushion unit 37 and the link mechanism 38. The cushion unit 37 is disposed in such a manner that a shaft center B thereof aligns with the center of the opening 17e and passes through to the rear and diagonally downward from the rear arm bracket portion 2b. The cushion unit 37, when viewed from the side of the vehicle, intersects with the rear arm 17 and the greater portion of it overlaps with the rear arm 17.

In the cushion unit 37, a piston 37b is inserted and disposed in a cylinder 37a in such a manner that it slides. The cushion unit 37 also includes a cushion main body 37d that allows a piston rod 37c that is connected to the piston 37b to protrude to the outside, and a coil-shaped cushion spring 37e that is disposed in such a way that it surrounds the cushion main body 37d.

The purpose of the cushion spring 37e is to absorb the impact load from the rear wheel 18. Moreover, the cushion main body 37d produces a pressure damping force during compression and an extension damping force during extension, and has the function of dampening extension and retraction movements of the cushion spring 37e together with absorbing impact load.

An end boss portion 37f of the piston rod 37c of the cushion main body 37d is linked by a support shaft 37h to a support boss portion 17g formed at the rear bottom edge of the opening 17e.

Moreover, a forked end boss portion 42a of a relay arm 42 of the link mechanism 38 is linked to a base end boss portion 37i of the cylinder 37a. Also, a longitudinal center portion of the relay arm 42 is supported by a support shaft 42c to a bracket 43 in such a manner that it swings. The bracket 43 is U-shaped, and a bottom side portion 43b is fixed to a cross frame 2h by a bolt 43a.

Moreover, an end boss portion 44a of an arm 44 is linked to a forked base end boss portion 42d of the relay arm 42 by a link pin 44c. The arm 44 has a substantially triangular shape and widens in the vehicle width direction as its extends downward from the end boss portion 44a, and a base end boss portion 44d formed at a bottom side portion is supported by a support boss portion 17h formed at the rear arm 17 by a support shaft 44f.

The recessed portion 20f formed at the front portion of the bottom wall 20e of the fuel tank 20 is formed so that it is offset from the vehicle centerline A towards the left side. A portion of the link mechanism 38 is positioned in the recessed portion 20f.

Moreover, the remote control-type operation characteristics adjuster 25 with which the operation characteristics of the cushion unit 37 can be adjusted through remote operation is connected to the cushion unit 37. The adjuster 25 includes a pressure damping force adjuster 56 with which the strength of the damping force produced by the cushion main body 37d during compression is adjusted, an extension damping force adjuster 57 with which the strength of the damping force during extension is adjusted, and an initial adjuster (spring force adjuster) 58 with which the initial value of the spring force produced by the cushion spring 37e is adjusted.

The pressure damping force adjuster 56 has a structure in which a sub-tank 56a disposed in the disposition portion D on the right side is connected, by a hydraulic oil hose 56b, to a connection opening 37i' formed in the base end portion 37i of the cylinder 37a of the cushion main body 37d. The sub-tank 56a is in a position in which it inclines with its rear portion raised and in which it is positioned below the footrest bracket 51. Moreover, the sub-tank 56a is fixed to the support leg portion 51b of the footrest bracket 51 by a fixing band 56c in such a way that it can be installed and removed with a bolt 53b.

An adjusting valve 56d that adjusts the pressure damping force through varying a hydraulic oil path area is formed on the rear end portion of the sub-tank 56a. The hydraulic oil hose 56b is connected to the top end portion of the adjusting valve 56d. Moreover, an adjusting knob 56e that varies the path area is provided in the bottom end portion (opposite hose connection portion) of the adjusting valve 56d. When this adjusting knob 56e is rotated, the path area is varied and the pressuring damping force varies along with this.

The initial adjuster 58 has a structure in which a cylinder mechanism 58a disposed in the disposition portion D' on the left side is connected by a hydraulic hose 57b to a drive portion 37m' formed in a spring bearing 37m of the cushion main body 37d. The cylinder mechanism 58a is in a position in which it inclines with its rear portion raised and in which it is positioned below the footrest bracket 51. Moreover, the cylinder mechanism 58a is fixed to the lower surface of the support leg portion 51b of the footrest bracket 51 by a bracket 58c in such a way that it can be installed and removed with a bolt 53c. An adjusting knob 58e is connected to the rear end portion of the cylinder mechanism 58a. When the adjusting knob 58e is rotated, the piston inside the cylinder mechanism 58a moves forward and backward, hydraulic pressure is transmitted to the drive portion 37m', and the pressurization of the cushion spring 37e is varied by the hydraulic pressure.

A main body 57a of the extension damping force adjuster 57 is disposed on the bottom surface of the rear arm 17 and is connected to a bottom end portion of the cushion main body 37d by a linking member 57b. Moreover, an adjusting knob 57e is provided on the rear end portion of the main body 57a. By rotating the adjusting knob 57e, the damping pressure is varied by the hydraulic pressure produced by the main body 57a. Note that a structure in which the rotation of the adjusting knob 57e is transmitted to the cushion main body 37d by a wire is also possible.

In the embodiment, an adjusting knob 56e of the pressure damping force adjuster 56 and an adjusting knob 58e of the initial adjuster 58, when viewed from the rear of the vehicle, are disposed on the inside from an outer end surface 24' of the rear fender 24 in the vehicle width direction and below the footrest 50. Therefore, a rider in the rear seat mistaking the adjusting knobs 56e and 58e for footrests and placing their feet on them is reliably inhibited. Also, there is no danger of a rider in the rear seat placing their feet on the adjusting knobs 56e and 58e, and therefore the adjusting knobs 56e and 58e can be disposed in a location that is visible from the side of the vehicle. As a result, operability can be improved.

Along with the footrest 50 including the footrest bracket 51 attached to the seat rail 26a and the footrest main body 52 attached to the footrest bracket 51, the adjusting knobs 56e and 58e are attached to the footrest bracket 51. Therefore, a dedicated bracket for installation is unnecessary.

Additionally, the adjusting knobs 56e and 58e are disposed in a space E, E' that is surrounded by the disposition portion D, D' and the muffler 13c disposed such that is runs along the side of the vehicle. Therefore, the muffler 13c fulfills the function of blocking stones that fly up against the adjusting knobs. Thus, damage to the adjusting knobs 56e and 58e is inhibited.

The rear fender 24 includes the mudguard 24a that covers the rear wheel from the top and the fender main body 24b that extends upward from the side edge portion 24a' of the mudguard in the vehicle width direction. Additionally, the disposition portion D, D' is formed in the boundary portion of the fender main body 24b and mudguard 24a. Also, the adjusting knobs 56e and 58e are disposed so that, when viewed from the side of the vehicle, they overlap with the disposition portion D, D' and are positioned below the footrest 50. Therefore, operability can be maintained while reliably inhibiting a rider in the rear seat from mistakenly placing their feet on the adjusting knobs.

The footrest bracket 51 is attached to be in contact with the support boss portion 26m of the back stay 26b by the bolts 53a inserted from bottom to top. Therefore, even when the fuel tank 20 disposed on the inner side of the back stay 26b bulges to the outside, the bolts 53a will not scratch the fuel tank and the tank capacity can be maintained.

The cylinder mechanism 58a and adjusting knob 58e of the initial adjuster 58 are disposed above the rear arm 17 and in the disposition portion D' on one side a in the vehicle width direction, and the sub-tank 56a and adjusting knob 56e of the pressure damping force adjuster 56 are disposed above the rear arm 17 in the disposition portion D on the other side b in the vehicle width direction. Therefore, the two adjusting knobs 58e and 56e can be disposed with good left to right balance, which also helps improve operability.

Note that, the explanation of the embodiment involved both the pressure damping force adjuster 56 and the initial adjuster 58 being provided. However, the present teaching can also be applied in cases in which only one of the adjusters is provided.

Moreover, the explanation of the embodiment involved a motorcycle. However, the present teaching can be applied to vehicles other than motorcycles such as straddle-type four-wheel vehicles for off-road use.

The description above discloses (among others), an embodiment of a straddle-type vehicle comprising a vehicle body frame, a vehicle body cover covering a side of a rear portion of the vehicle body frame, a footrest on which a rider in a rear seat can place his/her feet and which is attached to the vehicle body frame and protrudes outwards from the vehicle body cover, a rear arm supported in a swingable manner by the vehicle body frame, and a rear suspension disposed between the rear arm and a vehicle body frame, the saddle-type vehicle being characterized in that the rear suspension includes an adjuster by which operation characteristics of the rear suspension are remotely operated and adjusted; and adjusting knobs of the adjuster that, when viewed from the rear of the vehicle, are disposed on the inside in the vehicle width direction from an outside end surface of the vehicle body cover as well as below the footrest.

Preferably, the footrest includes a footrest bracket attached to the vehicle body frame and a footrest main body attached to the footrest bracket, and the adjusting knobs are attached to the footrest bracket.

Further, preferably the straddle-type vehicle further includes an exhaust system that includes a muffler disposed in such a manner as to pass through a side of the vehicle, and the adjusting knobs are positioned, when viewed from the rear of the vehicle, in such a manner as to be located in a space surrounded by the vehicle body cover, the footrest, and the muffler.

Further, preferably the vehicle body cover includes a mudguard that covers a rear wheel from the top thereof and a fender main body that extends upward from a side edge portion of the mudguard in a vehicle width direction, a disposition portion is formed in a boundary portion of the fender main body and the mudguard, and the adjusting knobs are disposed in such a manner as to overlap with the disposition portion and be positioned below the footrest when viewed from the side of the vehicle.

Further, preferably the vehicle body frame includes a rear portion frame and further includes a fuel tank disposed on the inside of the vehicle body frame, and the footrest bracket is attached to the bottom part of the rear portion frame.

Further, preferably the footrest bracket is attached by a bolt that is inserted from bottom to top in the bottom part.

Further, preferably the characteristics adjuster includes a spring force adjuster that adjusts a spring force of the rear suspension and a damping force adjuster that adjusts a damping force, an adjusting knob of the spring force adjuster is disposed above a rear arm and on one side in the vehicle width direction, and an adjusting knob of the damping force adjuster is disposed above the rear arm and on the other side in the vehicle width direction.

Further, preferably the characteristics adjuster includes a damping force adjuster that adjusts a damping force of the rear suspension, the damping force adjuster includes a sub-tank that is connected to the rear suspension by a hydraulic fluid path and stores hydraulic fluid, and an adjusting knob that is provided on the sub-tank and adjusts the area of the hydraulic fluid path, and the sub-tank and adjusting knob are disposed on the inside of the vehicle body cover outside end surface in the vehicle width direction as well as below the footrest.

Further, preferably the characteristics adjuster includes a spring force adjuster that adjusts a spring force of the rear suspension, the spring force adjuster includes a cylinder mechanism connected to the rear suspension by a hydraulic pressure path and an adjusting knob that is attached to the cylinder mechanism and which produces hydraulic pressure, and the cylinder mechanism and adjusting knob are disposed on the inside of the vehicle body cover outside end surface in the vehicle width direction as well as below the footrest.

In order to provide a straddle-type vehicle in which a rider on a rear seat will not place their feet in an incorrect position while maintaining operability at the same time, the following embodiment is suggested:
A rear suspension 19 includes an adjuster 25 in which the operating characteristics of the rear suspension can be adjusted through remote operation, and adjusting knobs 56e and 58e of the adjuster 25 are disposed, when view from the rear of a vehicle, on the inside in the vehicle width direction of an outer end surface 24' of a vehicle body cover 24 and under a footrest 50.

## Claims

1. Straddle-type vehicle comprising:
a vehicle body frame (2),
at least one footrest (50) on which a rider sitting on a rear seat (23b) of the straddle-type vehicle can place his/her foot, and which is attached to the vehicle body frame (2),
a rear arm (17) swingably supported by the vehicle body frame (2) and having a rear suspension (19), the rear suspension (19) including at least one remote control-type operation characteristics adjuster (56,57,58) configured to remotely adjust at least one operation characteristic of the rear suspension (19), wherein
the adjuster (56,57,58) is at least partly disposed below the footrest (50) when viewed from a rear of the straddle-type vehicle.

2. Straddle-type vehicle according to claim 1, wherein a vehicle body cover (24) covers at least a side of a rear portion of the vehicle body frame (2), wherein, preferably, the footrest (50) protrudes outwards from the vehicle body cover (24), and wherein, preferably, the remote control-type operation characteristics adjuster (56,57,58) is at least partly disposed in vehicle width direction on an inside of an outer end surface (24') of the vehicle body cover (24) when viewed from the rear of the straddle-type vehicle.

3. Straddle-type vehicle according to claim 1 or 2, wherein the remote control-type operation characteristics adjuster (56,57,58) comprises an adjusting knob (56e,57e,58e) which is disposed in vehicle width direction on the inside of the outer end surface (24') of the vehicle body cover (24) and/or below the footrest (50) when viewed from the rear of the vehicle.

4. Straddle-type vehicle according to one of claims 1 to 3, wherein the footrest (50) includes a footrest bracket (51) attached to the vehicle body frame (2) and a footrest main body (52) attached to the footrest bracket (51), and, preferably, the remote control-type operation characteristics adjuster (56,58), in particular the adjusting knob (56e,58e), is attached to the footrest bracket (51).

5. Straddle-type vehicle according to one of claims 1 to 4, wherein the vehicle body frame (2) includes a rear frame (26) and a fuel tank (20) disposed on an inside of the vehicle body frame (2), and, preferably, the footrest bracket (51) is attached to a bottom part of the rear frame (26).

6. Straddle-type vehicle according to claim 5, wherein the footrest bracket (51) is attached by a bolt (53a) that is inserted from bottom to top in the bottom part of the rear frame (26).

7. Straddle-type vehicle according to one of claims 2 to 6, wherein an exhaust system (13) including a muffler (13c) is disposed so as to pass through at least one side of the straddle-type vehicle, and, preferably, the remote control-type operation characteristics adjuster (56,58), in particular the adjusting knob (56e,58e), is located in a space surrounded by at least two of the vehicle body cover (24), the footrest (50) and the muffler (13c) when viewed from the rear of the straddle-type vehicle.

8. Straddle-type vehicle according to one of claims 2 to 7, wherein the vehicle body cover (24) includes a mudguard (24a) that covers a rear wheel (18) of the straddle-type vehicle from a top thereof and a fender main body (24b) that extends upward from a side edge portion of the mudguard (24a) in vehicle width direction, wherein, preferably, a disposition portion (D) is formed in a boundary portion of the fender main body (24b) and the mudguard (24a), and, preferably, the remote control-type operation characteristics adjuster (56,58), in particular the adjusting knob (56e,58e), overlaps with the disposition portion (D) and is positioned below the footrest (50) when viewed from a side of the straddle-type vehicle.

9. Straddle-type vehicle according to one of claims 1 to 8, wherein the remote control-type operation characteristics adjuster (56,57,58) includes a spring force adjuster (58) configured to adjust a spring force of the rear suspension (19) and/or at least one damping force adjuster (56,57) configured to adjust a damping force of the rear suspension (19).

10. Straddle-type vehicle according to claim 9, wherein the damping force adjuster (56,57) includes a pressure damping force adjuster (56) and/or an extension damping force adjuster (57).

11. Straddle-type vehicle according to claim 9 or 10, wherein an adjusting knob (58e) of the spring force adjuster (58) is disposed above the rear arm (17) and on one side in vehicle width direction, and, preferably, an adjusting knob (56e) of the damping force adjuster (56) is disposed above the rear arm (17) and on the other side in vehicle width direction.

12. Straddle-type vehicle according to one of claims 9 to 11, wherein the damping force adjuster (56) includes a sub-tank (56a) that is connected to the rear suspension (19) by a hydraulic fluid path (56b) and stores hydraulic fluid, and, preferably, an adjusting knob (56e) that is provided on the sub-tank (56a).

13. Straddle-type vehicle according to claim 12, wherein the sub-tank (56a) and adjusting knob (56) are disposed in vehicle width direction on an inside of an outer end surface (24') of the vehicle body cover (24) and below the footrest (50).

14. Straddle-type vehicle according to one of claims 9 to 13, wherein the spring force adjuster (58) includes a cylinder mechanism (58a) connected to the rear suspension (19) by a hydraulic pressure path (58b), and, preferably, an adjusting knob (58e) that is attached to the cylinder mechanism (58a).

15. Straddle-type vehicle according to claim 14, wherein the cylinder mechanism (58a) and adjusting knob (58e) are disposed in vehicle width direction on an inside of an outer end surface (24') of the vehicle body cover (24) and below the footrest (50).

## Patentansprüche

1. Spreiz-Sitz-Typ-Fahrzeug, das umfasst:
einen Fahrzeug-Körper-Rahmen (2),
zumindest eine Fuß-Ablage (50), auf welcher ein Fahrer, der auf einem Rück-Sitz (23b) des Spreiz-Sitz-Typ-Fahrzeugs sitzt, seinen/ihren Fuß plazieren kann, und die an dem Fahrzeug-Körper-Rahmen 2 angebracht ist;
einen hinteren Arm (17), der schwenkbar durch den Fahrzeug-Körper-Rahmen (2) gelagert ist, und eine hintere Federung (19) hat, die hintere Federung (19) beinhaltet zumindest einen Fern-Steuer-Typ-Betriebs-Charakteristika-Einsteller (56, 57, 58), der konfigurierte ist um zumindest eine Betriebs-Charakteristik der hinteren Federung (19) fern einzustellen, wobei
der Einsteller (56, 57, 58) zumindest teilweise unterhalb der Fuß-Ablage (50) positioniert, wenn betrachtet von hinten von dem Spreiz-Sitz-Typ-Fahrzeug.

2. Spreiz-Sitz-Typ-Fahrzeug gemäß Anspruch 1, wobei eine Fahrzeug-Körper-Abdeckung (24) zumindest eine Seite von einem hinteren Abschnitt des Fahrzeug-Körper-Rahmens (2) abdeckt, wobei, bevorzugt, die Fuß-Ablage (50) nach außen von der Fahrzeug-Körper-Abdeckung (24) vorsteht, und wobei, bevorzugt, die Fern-Steuer-Typ-Betriebs-Charakteristika-Einsteller (56, 57, 58) zumindest teilweise in Fahrzeug-Breiten-Richtung an einer Seite von einer äußeren Endfläche (24') der Fahrzeug-Körper-Abdeckung (24) positioniert ist, wenn betrachtet von hinten von dem Spreiz-Sitz-Typ-Fahrzeug.

3. Spreiz-Sitz-Typ-Fahrzeug gemäß Anspruch 1 oder 2, wobei der Fern-Steuer-Typ-Betriebs-Charakteristika-Einsteller (56, 57, 58) einen Einstell-Knopf (56e, 57e, 58e) umfasst, der in Fahrzeug-Breiten-Richtung an der Innenseite der äußeren Endfläche (24') der Fahrzeug-Körper-Abdeckung (24) und/oder unterhalb der Fuß-Ablage (50) positioniert ist, wenn betrachtet von hinten von dem Fahrzeug.

4. Spreiz-Sitz-Typ-Fahrzeug gemäß einem der Ansprüche 1 bis 3, wobei die Fuß-Ablage (50) eine Fuß-Ablage-Klammer (51), die an dem Fahrzeug-Körper-Rahmen (2) angebracht ist, und einen Fuß-Ablage-Haupt-Körper (52), der an der Fuß-Ablage-Klammer (51) angebracht ist, beinhaltet, und, bevorzugt, der Fern-Steuer-Typ-Betriebs-Charakteristika-Einsteller (56, 58), im speziellen der Einstell-Knopf (56e, 58e), ist an der Fuß-Ablage-Klammer (51) angebracht.

5. Spreiz-Sitz-Typ-Fahrzeug gemäß einem der Ansprüche 1 bis 4, wobei der Fahrzeug-Körper-Rahmen (2) einen hinteren Rahmen (26) und einen Kraftstoff-Tank (20), angeordnet an der Innenseite des Fahrzeug-Körper-Rahmens (2), beinhaltet, und, bevorzugt, die Fuß-Ablage-Klammer (51) an einem Boden-Teil des hinteren Rahmens (26) angebracht ist.

6. Spreiz-Sitz-Typ-Fahrzeug gemäß Anspruch 5, wobei die Fuß-Ablage-Klammer (51) durch einen Bolzen (53a), der von unten nach oben in dem Boden-Teil des hinteren Rahmens (26) eingesetzt ist, angebracht ist.

7. Spreiz-Sitz-Typ-Fahrzeug gemäß einem der Ansprüche 2 bis 6, wobei ein AbgasSystem (13), das einen Dämpfer (13c) beinhaltet, positioniert ist, so dass dieses durch zumindest eine Seite von dem Spreiz-Sitz-Typ-Fahrzeug hindurchtritt, und, bevorzugt, der Fern-Steuer-Typ-Betriebs-Charakteristika-Einsteller (56, 58), im speziellen der Einstell-Knopf (56e, 58e), ist in einem Raum, umgeben durch zumindest zwei von der Fahrzeug-Körper-Abdeckung (24), der Fuß-Ablage (50) und dem Dämpfer (13c), angeordnet ist, wenn betrachtet von hinten von dem Spreiz-Sitz-Typ-Fahrzeug.

8. Spreiz-Sitz-Typ-Fahrzeug gemäß einem der Ansprüche 2 bis 7, wobei die Fahrzeug-Körper-Abdeckung (24) eine Schmutz-Führung (24a), welche ein Hinter-Rad (18) des Spreiz-Sitz-Typ-Fahrzeugs von oben derselben abdeckt, und einen Schutzblech-Haupt-Körper (24) beinhaltet, der sich nach oben von einer Seiten-Kante von der Schmutz-Führung (24a) in der Fahrzeug-Breiten-Richtung erstreckt, wobei, bevorzugt, ein Anordnungs-Abschnitt (D) in einem Grenz-Abschnitt des Schutzblech-Haupt-Körpers (24b) und der Schmutz-Führung (24a) ausgebildet ist, und, bevorzugt, der Fern-Steuer-Typ-Betriebs-Charakteristika-Einsteller (56, 58), im speziellen der Einstell-Knopf (56e, 58e), überlappt mit dem Anordnungs-Abschnitt (D) und ist unterhalb der Fuß-Ablage (50) positioniert, wenn betrachtet von einer Seite von dem Spreiz-Sitz-Typ-Fahrzeug.

9. Spreiz-Sitz-Typ-Fahrzeug gemäß einem der Ansprüche 1 bis 8, wobei der Fern-Steuer-Typ-Betriebs-Charakteristika-Einsteller (56, 57, 58) einen Feder-Kraft-Einsteller (58), der konfiguriert ist, um eine Feder-Kraft der hinteren Federung (19) einzustellen, und/oder zumindest einen Dämpfer-Kraft-Einsteller (56, 57) beinhaltet, der konfiguriert ist um eine Dämpfer-Kraft der hinteren Feder (19) einzustellen.

10. Spreiz-Sitz-Typ-Fahrzeug gemäß Anspruch 9, wobei der Dämpfer-Kraft-Einsteller (56, 57) einen Druck-Dämpfer-Kraft-Einsteller (56) und/oder einen Zug-Dämpfer-Kraft-Einsteller (57) beinhaltet.

11. Spreiz-Sitz-Typ-Fahrzeug gemäß Anspruch 9 oder 10, wobei der Einstell-Knopf (58e) des Feder-Kraft-Einstellers (58) oberhalb des hinteren Arms (17) und an einer Seite in der Fahrzeug-Breiten-Richtung positioniert ist, und, bevorzugt, ein Einstell-Knopf (56e) des Dämpfer-Kraft-Einstellers (56) ist oberhalb des hinteren Arms (17) und an der anderen Seite in der Fahrzeug-Breiten-Richtung positioniert.

12. Spreiz-Sitz-Typ-Fahrzeug gemäß einem der Ansprüche 9 bis 11, wobei der Dämpfer-Kraft-Einsteller (56) einen Unter-Tank (56a), der mit der hinteren Federung (19) durch einen Hydraulik-Fluid-Pfad (56b) verbunden ist, und Hydraulik-Fluid lagert, und, bevorzugt, einen Einstell-Knopf (56e), der an dem Unter-Tank (56a) vorgesehen ist, beinhaltet.

13. Spreiz-Sitz-Typ-Fahrzeug gemäß Anspruch 12, wobei der Unter-Tank (56a) und Einstell-Knopf (56) in der Fahrzeug-Breiten-Richtung an einer Seite von einer äußeren Endfläche (24') der Fahrzeug-Körper-Abdeckung (24) und unterhalb der Fuß-Ablage (50) positioniert sind.

14. Spreiz-Sitz-Typ-Fahrzeug gemäß einem der Ansprüche 9 bis 13, wobei der Feder-Kraft-Einsteller (58) einen Zylinder-Mechanismus (58a), der mit der hinteren Federung (19) durch einen Hydraulik-Druck-Pfad (58b) verbunden ist, und, bevorzugt, einen Einstell-Knopf (58e), der an dem Zylinder-Mechanismus (58a) angebracht ist, beinhaltet.

15. Spreiz-Sitz-Typ-Fahrzeug gemäß Anspruch 14, wobei der Zylinder-Mechanismus (58a) und Einstell-Knopf (58e) in der Fahrzeug-Breiten-Richtung an einer Innenseite von einer äußeren Endfläche (24') der Fahrzeug-Körper-Abdeckung (24) und unterhalb der Fuß-Ablage (50) positioniert sind.

## Revendications

1. Véhicule de type à selle comprenant :
un châssis de véhicule (2),
au moins un repose-pied (50) sur lequel un passager assis sur un siège arrière (23b) du véhicule de type à selle peut placer son pied et qui est fixé au châssis de véhicule (2),
un bras arrière (17) soutenu de manière oscillante par le châssis de véhicule (2) et présentant une suspension arrière (19), la suspension arrière (19) incluant au moins un dispositif de réglage de caractéristiques de fonctionnement de type à commande à distance (56,57,58) configuré pour ajuster à distance au moins une caractéristique de fonctionnement de la suspension arrière (19), dans lequel
le dispositif de réglage (56,57,58) est au moins partiellement disposé sous le repose-pied (50) lorsque visualisé depuis un arrière du véhicule de type à selle.

2. Le véhicule de type à selle selon la revendication 1, dans lequel un capot de châssis de véhicule (24) couvre au moins un côté d'une partie arrière du châssis de véhicule (2), dans lequel, de préférence, le repose-pied (50) dépasse vers l'extérieur du capot de véhicule (24), et dans lequel, de préférence, le dispositif de réglage de caractéristiques de fonctionnement de type à commande à distance (56,57,58) est au moins partiellement disposé dans une direction de largeur de véhicule sur un intérieur d'une surface d'extrémité extérieure (24') du capot de châssis de véhicule (24) lorsque visualisé depuis l'arrière du véhicule de type à selle.

3. Le véhicule de type à selle selon la revendication 1 ou 2, dans lequel le dispositif de réglage de caractéristiques de fonctionnement de type à commande à distance (56,57,58) comprend une molette de réglage (56e,57e,58e) qui est placée dans une direction de largeur de véhicule sur l'intérieur de la surface d'extrémité extérieure (24') du capot de châssis de véhicule (24) et/ou sous le repose-pied (50) lorsque visualisé depuis l'arrière du véhicule.

4. Le véhicule de type à selle selon l'une des revendications 1 à 3, dans lequel le repose-pied (50) inclut une fixation de repose-pied (51) rattachée au châssis de véhicule (2) et un corps principal de repose-pied (52) rattaché à la fixation de repose-pied (51), et, de préférence, le dispositif de réglage de caractéristiques de fonctionnement de type à commande à distance (56,58), en particulier la molette de réglage (56e,58e), est fixé à la fixation de repose-pied (51).

5. Le véhicule de type à selle selon l'une des revendications 1 à 4, dans lequel le châssis de véhicule (2) comprend un châssis arrière (26) et un réservoir de carburant (20) installé sur un intérieur du châssis de véhicule (2), et, de préférence, la fixation de repose-pied (51) est fixée à une partie inférieure du châssis arrière (26).

6. Le véhicule de type à selle selon la revendication 5, dans lequel la fixation de repose-pied (51) est fixée par un boulon (53a) qui est inséré de bas en haut dans la partie inférieure du châssis arrière (26).

7. Le véhicule de type à selle selon l'une des revendications 2 à 6, dans lequel un système d'échappement (13) incluant un silencieux (13c) est installé de sorte à traverser au moins un côté du véhicule de type à selle, et, de préférence, le dispositif de réglage de caractéristiques de fonctionnement de type à commande à distance (56,58), en particulier la molette de réglage (56e,58e), est situé dans un espace entouré par au moins deux du capot de châssis de véhicule (24), du repose-pied (50) et du silencieux (13c) lorsque visualisé depuis l'arrière du véhicule de type à selle.

8. Le véhicule de type à selle selon l'une des revendications 2 à 7, dans lequel le capot de corps de véhicule (24) inclut un garde-boue (24a) qui couvre une roue arrière (18) du véhicule de type à selle depuis un dessus de celui-ci et un corps principal d'aile (24b) qui s'étend vers le haut depuis une partie d'arête latérale du garde-boue (24a) dans une direction de largeur de véhicule, dans lequel, de préférence, une partie d'installation (D) est constituée dans une partie de délimitation du corps principal d'aile (24b) et du garde-boue (24a), et, de préférence, le dispositif de réglage de caractéristiques de fonctionnement de type à commande à distance (56,58), en particulier la molette de réglage (56e,58e), chevauche la partie d'installation (D) et est positionné sous le repose-pied (50) lorsque visualisé depuis un côté du véhicule de type à selle.

9. Le véhicule de type à selle selon l'une des revendications 1 à 8, dans lequel le dispositif de réglage de caractéristiques de fonctionnement de type à commande à distance (56,57,58) inclut un dispositif de réglage de force de ressort (58) configuré pour ajuster une force de ressort de la suspension arrière (19) et/ou au moins un dispositif de réglage de force d'amortissement (56,57) configuré pour ajuster une force d'amortissement de la suspension arrière (19).

10. Le véhicule de type à selle selon la revendication 9, dans lequel le dispositif de réglage de force d'amortissement (56,57) inclut un dispositif de réglage de force d'amortissement à pression (56) et/ou un dispositif de réglage de force d'amortissement à extension (57).

11. Le véhicule de type à selle selon la revendication 9 ou 10, dans lequel une molette de réglage (58e) du dispositif de réglage de force de ressort (58) est disposée au-dessus du bras arrière (17) et sur un côté dans une direction de largeur de véhicule, et, de préférence, une molette de réglage (56e) du dispositif de réglage de force d'amortissement (56) est disposée au-dessus du bras arrière (17) et sur l'autre côté d'une direction de largeur de véhicule.

12. Le véhicule de type à selle selon une des revendications 9 à 11, dans lequel le dispositif de réglage de force d'amortissement (56) inclut un sous-réservoir (56a) qui est connecté à la suspension arrière (19) par un conduit de fluide hydraulique (56b) et stocke un fluide hydraulique, et, de préférence, une molette de réglage (56e) qui est fournie sur le sous-réservoir (56a).

13. Le véhicule de type à selle selon la revendication 12, dans lequel le sous-réservoir (56a) et la molette de réglage (56) sont disposés dans une direction de largeur de véhicule sur un intérieur d'une surface d'extrémité extérieure (24') du capot de corps de véhicule (24) et sous le repose-pied (50).

14. Le véhicule de type à selle selon l'une des revendications 9 à 13, dans lequel le dispositif de réglage de force de ressort (58) inclut un mécanisme de cylindre (58a) connecté à la suspension arrière (19) par un conduit de pression hydraulique (58b), et, de préférence, une molette de réglage (58e) qui est fixée au mécanisme de cylindre (58a).

15. Le véhicule de type à selle selon la revendication 14, dans lequel le mécanisme de cylindre (58a) et une molette de réglage (58e) sont disposés dans une direction de largeur de véhicule sur un intérieur d'une surface d'extrémité extérieure (24') du capot de corps de véhicule (24) et sous le repose-pied (50).
